(19) Europäisches Patentamt
European Patent Office
Office européen des brevets

(11) **EP 2 089 334 B1**

(12) **EUROPEAN PATENT SPECIFICATION**

(45) Date of publication and mention
of the grant of the patent:
**01.06.2011 Bulletin 2011/22**

(51) Int Cl.:
*C08G 18/66* (2006.01)     *C08G 18/67* (2006.01)

(21) Application number: **07874170.9**

(22) Date of filing: **13.12.2007**

(86) International application number:
**PCT/US2007/025426**

(87) International publication number:
**WO 2008/133668 (06.11.2008 Gazette 2008/45)**

(54) **D1369 D RADIATION CURABLE SECONDARY COATING FOR OPTICAL FIBER**

STRAHLUNGSHÄRTBARE D1369 D-SEKUNDÄRBESCHICHTUNG FÜR OPTISCHE FASERN

REVÊTEMENT SECONDAIRE DURCISSABLE PAR RAYONNEMENT POUR FIBRE OPTIQUE D1369 D

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **14.12.2006 US 874723 P**

(43) Date of publication of application:
**19.08.2009 Bulletin 2009/34**

(73) Proprietor: **DSM IP Assets B.V.**
**6411 TE Heerlen (NL)**

(72) Inventors:
• **CATTRON, Wendell, Wayne**
**Iron Station, NC 28080 (US)**
• **SCHMID, Steven, R.**
**East Dundee, IL 60118 (US)**
• **MURPHY, Edward, J.**
**Arlington Heights, IL 60005 (US)**
• **ZIMMERMAN, John, M.**
**Crystal Lake, IL 60014 (US)**
• **TORTORELLO, Anthony, Joseph**
**Elmhurst, IL 60126 (US)**

(74) Representative: **Hatzmann, Martin**
**Vereenigde**
**Johan de Wittlaan 7**
**2517 JR Den Haag (NL)**

(56) References cited:
EP-A- 1 408 017    EP-A- 1 647 585
WO-A-02/42236    WO-A-98/57902
JP-A- 2004 051 905    JP-A- 2004 210 879
US-A- 5 616 630    US-A1- 2002 057 881
US-A1- 2004 048 946    US-B1- 6 630 242
US-B2- 6 714 712    US-B2- 7 135 229

• PODKOSCIELNY W ET AL: "URETHANE-ACRYLATE COMPOSITIONS CURED BY UV RADIATION AS INTERMEDIATE PROTECTIVE COVERS OF OPTICAL FIBERS" ANGEWANDTE MAKROMOLEKULARE CHEMIE. APPLIED MACROMOLECULAR CHEMISTRY AND PHYSICS, WILEY VCH, WEINHEIM, DE, vol. 242, November 1996 (1996-11), pages 123-138, XP000689751 ISSN: 0003-3146
• STEEMAN ET AL: "Mechanical analysis of the in-situ Primary Coating modulus test for optical fibers", PROCEEDINGS 52ND INTERNATIONAL WIRE AND CABLE SYMPOSIUM (IWCS),, 10 November 2003 (2003-11-10), pages 246-251,ANNEX, XP007917119,

Remarks:
The file contains technical information submitted after the application was filed and not included in this specification

**Description**

This patent application claims priority to U.S. Provisional Patent Application No. 60/874,723, "D Radiation Curable Secondary Coating For Optical Fiber", filed December 14 2006

FIELD OF THE INVENTION

The present invention relates to radiation curable coatings for use as a Secondary Coating for optical fibers, optical fibers coated with said coatings and methods for the preparation of coated optical fibers.

BACKGROUND OF THE INVENTION

Optical fibers are typically coated with two or more radiation curable coatings. These coatings are typically applied to the optical fiber in liquid form, and then exposed to radiation to effect curing. The type of radiation that may be used to cure the coatings should be that which is capable of initiating the polymerization of one or more radiation curable components of such coatings. Radiation suitable for curing such coatings is well known, and includes ultraviolet light (hereinafter "UV") and electron beam ("EB"). The preferred type of radiation for curing coatings used in the preparation of coated optical fiber is UV.

The coating which directly contacts the optical fiber is called the Primary Coating, and the coating that covers the Primary Coating is called the Secondary Coating. It is known in the art of radiation curable coatings for optical fibers that Primary Coatings are advantageously softer than Secondary Coatings. One advantage flowing from this arrangement is enhanced resistance to microbends,

Microbends are sharp but microscopic curvatures in an optical fiber involving local axial displacements of a few micrometers and spatial wavelengths of a few millimeters. Microbends can be induced by thermal stresses and/or mechanical lateral forces. When present, microbends attenuate the signal transmission capability of the coated optical fiber. Attenuation is the undesirable reduction of signal carried by the optical fiber.

The relatively soft inner Primary Coating provides resistance to microbending which results in attenuation of the signal transmission capability of the coated optical fiber and is therefore undesirable. Microbends are sharp but microscopic curvatures in the optical fiber involving local axial displacements of a few micrometers and spatial wavelengths of a few millimeters. Microbends can be induced by thermal stresses and/or mechanical lateral forces. Coatings can provide lateral force protection that protect the optical fiber from microbending, but as coating diameter decreases the amount of protection provided decreases. The relationship between coatings and protection from lateral stress that leads to microbending is discussed, for example, in D. Gloge, "Optical-fiber packaging and its influence on fiber straightness and loss", Bell System Technical Journal, Vol. 54, 2, 245 (1975); W.B. Gardner, "Microbending Loss in Optical Fibers", Bell System Technical Journal, Vol. 54, No. 2, p. 457 (1975); T. Yabuta, "Structural Analysis of Jacketed Optical Fibers Under Lateral Pressure", J. Lightwave Tech., Vol. LT-1, No. 4, p. 529 (1983); L.L. Blyler, "Polymer Coatings for Optical Fibers", Chemtech, p. 682 (1987); J. Baldauf, "Relationship of Mechanical Characteristics of Dual Coated Single Mode Optical Fibers and Microbending Loss", IEICE Trans. Commun., Vol. E76-B, No. 4, 352 (1993); and K. Kobayashi, "Study of Microbending Loss in Thin Coated Fibers and Fiber Ribbons", IWCS, 386 (1993). The harder outer Primary Coating, that is, the Secondary Coating, provides resistance to handling forces such as those encountered when the coated fiber is ribboned and/or cabled.

Optical fiber Secondary Coating compositions generally comprise, before cure, a mixture of ethylenically-unsaturated compounds, often consisting of one or more oligomers dissolved or dispersed in liquid ethylenically-unsaturated diluents and photoinitiators. The coating composition is typically applied to the optical fiber in liquid form and then exposed to actinic radiation to effect cure.

In many of these compositions, use is made of a urethane oligomer having reactive termini and a polymer backbone. Further, the compositions generally comprise reactive diluents, photoinitiators to render the compositions UV-curable, and other suitable additives.

Published PCT Patent Application WO 2005/026228 A1, published September 17, 2004, "Curable Liquid Resin Composition", with named inventors Sugimoto, Karno, Shigemoto, Komiya and Steeman describes and claims a curable liquid resin composition comprising: (A) a urethane (meth) acrylate having a structure originating from a polyol and a number average molecular weight of 800 g/mol or more, but less than 6000 g/mol, and (B) a urethane (meth) acrylate having a structure originating from a polyol and a number average molecular weight of 6000 g/mol or more, but less than 20,000 g/mol, wherein the total amount of the component (A) and component (B) is 20-95 wt% of the curable liquid resin composition and the content of the component (B) is 0.1-30 wt% of the total of the component (A) and component (B).

Many materials have been suggested for use as the polymer backbone for the urethane oligomer. For example, polyols such as hydrocarbon polyols, polyether polyols, polycarbonate polyols and polyester polyols have been used in urethane oligomers. Polyester polyols are particularly attractive because of their commercial availability, oxidative stability and versatility to tailor the characteristics of the coating by tailoring the backbone. The use of polyester polyols as the backbone polymer in a urethane acrylate oligomer is described, for example, in U.S. Patents 5,146,531, 6,023,547, 6,584,263, 6,707,977, 6,775,451 and 6,862,392, as well as European Patent 539 030 A.

Concern over the cost, use and handling of urethane precursors has lead to the use of methane-free oligomers in coating compositions. For example, urethane-free polyester acrylate oligomers have been used in radiation-curable coating compositions for optical glass fibers, Japanese Patent 57-092552 (Nitto Electric) discloses an optical glass fiber coating material comprising a polyester di(meth)acrylate where the polyester backbone has an average molecular weight of 300 or more. German Patent Application 04 12 68 60 A1 (Bayer) discloses a matrix material for a three-fiber ribbon consisting of a polyester acrylate oligomer, 2-(N-butyl-carbamyl)ethylacrylate as reactive diluent and 2-hydroxy-2-methyl-1-phenyl-propan-1-one as photoinitiator. Japanese Patent Application No. 10-243227 (Publication No. 2000-072821) discloses a liquid curable resin composition comprising a polyester acrylate oligomer which consists of a polyether diol end-capped with two diacids or anhydrides and terminated with hydroxy ethyl acrylate. U.S. Patent 6,714,712 B2 discloses a radiation curable coating composition comprising a polyester and/or alkyd (meth)acrylate oligomers comprising a polyacid residue or an anhydride thereof, optionally a reactive diluent, and optionally a photoinitiator. Also, Mark D. Soucek and Aaron H. Johnson disclose the use of hexahydrophthalic acid for hydrolytic resistance in "New Intramolecular Effect Observed for Polyesters: An Anomeric Effect," JCT Research, Vol. 1, No. 2, p. 111 (April 2004).

US-B-6 630 242 describes radiation-curable compositions for optical fibee coatings. Example 9 of this document describes the preparation of colored outer primary coatings (also known as secondary coatings). None of these outer primary coatings comprise an Omega Oligomer as defined herein which is prepared using a tripropylene glycol.

Despite the efforts of the prior art to develop coating compositions comprising urethane-free oligomers, there remains a need for Secondary Coatings which are economical while satisfying the many diverse requirements desired, such as improved curing and enhanced cure speeds, and versatility in application while still achieving the desired physical characteristics of the various coatings employed.

While a number of Secondary Coatings are currently available, it is desirable to provide novel Secondary Coatings which have improved manufacturing and/or performance properties relative to existing coatings.

SUMMARY OF THE INVENTION

A first aspect of the instant claimed invention is a Radiation Curable Secondary Coating Composition, wherein said composition comprises

> A) a Secondary Coating Oligomer Blend, which is mixed with
> B) a first diluent monomer,
> C) a second diluent monomer;
> D) optionally, a third diluent monomer;
> E) an antioxidant;
> F) a first photoinitiator;
> G) a second photoinitiator; and
> H) optionally a slip additive or a blend of slip additives;

wherein said Secondary Coating Oligomer Blend comprises:

> α) an Omega Oligomer; and
> β) an Upsilon Oligomer;

wherein said Omega Oligomer is synthesized by the reaction of

> α1) a hydroxyl-containing (meth)acrylate;
> α2) an isocyanate;
> α3) a polyether polyol; and
> α4) tripropylene glycol; in the presence of
> α5) a polymerization inhibitor; and
> α6) a catalyst;

to yield the Omega Oligomer;
wherein said catalyst is selected from the group consisting of copper naphthenate, cobalt naphthenate, zinc naphthenate, triethylamine, triethylenediamine, 2-methyltriethyleneamine, dibutyl tin dilaurate; metal carboxylates ; amino or organo-base catalysts ; alkoxides of zirconium and titanium ; and ionic liquid phosphonium, imidazolium and pyridinium salts ;

and wherein said Upsilon Oligomer is an epoxy diacrylate.

A second aspect of the instant claimed invention is a process for coating an optical fiber, the process comprising:

a) operating a glass drawing tower to produce a glass optical fiber; and
b) coating said glass optical fiber with a commercially available radiation curable Primary Coating composition;
c) optionally contacting said radiation curable Primary Coating composition with radiation to cure the coating;
d) coating said glass optical fiber with the radiation curable Secondary Coating composition of Claim 1;
e) contacting said radiation curable Secondary Coating composition with radiation to cure the coating

A third aspect of the instant claimed invention is wherein said glass drawing tower is operated at a line speed of between 750 meters/minute and 2100 meters/minute.

A fourth aspect of the instant claimed invention is a wire coated with a first and second layer, wherein the first layer is a cured radiation curable Primary Coating that is in contact with the outer surface of the wire and the second layer is a cured radiation curable Secondary Coating of the instant claimed invention in contact with the outer surface of the Primary Coating,
wherein the cured Secondary Coating on the wire has the following properties after initial cure and after one month aging at 85°C and 85% relative humidity:

A) a % RAU of from 80% to 98%;
B) an in-situ modulus of between 0.60 GPa and 1.90 GPa; and
C) a Tube Tg, of from 50°C to 80°C.

A fifth aspect of the instant claimed invention is an optical fiber coated with a first and second layer, wherein the first layer is a cured radiation curable Primary Coating that is in contact with the outer surface of the optical fiber and the second layer is a cured radiation curable Secondary Coating of the instant claimed invention in contact with the outer surface of the Primary Coating,
wherein the cured Secondary Coating on the optical fiber has the following properties after initial cure and after one month aging at 85°C and 85% relative humidity:

A) a % RAU of from 80% to 98%;

B) an in-situ modulus of between 0.60 GPa and 1.90 GPa; and

C) a Tube Tg, of from 50°C to 80°C.

DETAILED DESCRIPTION OF THE INVENTION

Throughout this patent application the following abbreviations have the indicated meaning:

| Abbreviation | Meaning |
| --- | --- |
| BHT | 2,-6-di-tert-butyl-4-methylphenol, available from Fitz Chem. |
| CAS | means Chemical Abstracts Registry Number |
| CN-120Z | epoxy diacrylate, available from Sartomer. |
| DABCO | 1,4-diazabicyclo[2.2.2]octane, available from Air Products. |
| DBTDL | dibutyl tin dilaurate, available from OMG Americas. |
| HEA | hydroxyethyl acrylate available from BASF. |
| HHPA | hexahydrophthalic anhydride available from Milliken Chemical. |
| Irgacure 184 | 1 hydroxycyclohexyl phenyl ketone from Cuba Geigy |
| Irganox 1035 | thiodiethylene bis (3,5-di-tert-butyl-4-hydroxyhydrocinnamate), available from Ciba Geigy. |
| SR-506 | isobomyl acrylate, available as SR-506 from Sartomer. |
| Photomer 4066 | ethoxylated nonylphenol acrylate, available from Cognis. |
| Pluracol 1010 | polypropylene glycol (MW=1000), available from BASF. |
| SR-306HP | tripropylene glycol diacrylate (TPGDA), available from Sartomer. |
| SR-349 | ethoxylated bisphenol A diacrylate, available from Sartomer. |
| TDI | An 80/20 blend of the 2,4- and 2,6- isomer of toluene diisocyanate, available from BASF |
| IPDI | Isophorone diisocyanate, available from Bayer |

(continued)

| Abbreviation | Meaning |
|---|---|
| TPO | 2,4,6-trimethylbenzoyidiphenylphosphine oxide, available from Chitech. |

A first aspect of the instant claimed invention is a Radiation Curable Secondary Coating Composition, wherein said composition comprises

    A) a Secondary Coating Oligomer Blend, which is mixed with
    B) a first diluent monomer;
    C) a second diluent monomer;
    D) optionally, a third diluent monomer;
    E) an antioxidant;
    F) a first photoinitiator;
    G) a second photoinitiator; and
    H) optionally a slip additive or a blend of slip additives;

wherein said Secondary Coating Oligomer Blend comprises:

    α) an Omega Oligomer; and
    β) an Upsilon Oligomer;

wherein said Omega Oligomer is synthesized by the reaction of

    α1) a hydroxyl-containing (meth)acrylate;
    α2) an isocyanate;
    α3) a polyether polyol; and
    α4) tripropylene glycol; in the presence of
    α5) a polymerization inhibitor; and
    α6) a catalyst;

to yield the Omega Oligomer;
wherein said catalyst is selected from the group consisting of copper naphthenate, cobalt naphthenate, zinc naphthenate, triethylamine, triethylenediamine, 2-methyltriethyleneamine, dibutyl tin dilaurate; metal carboxylates sulfonic acids ; amino or organo-base catalysts, alkoxides of zirconium and titanium, and ionic liquid phosphonium, imidazolium and pyridinium salts and
wherein said Upsilon Oligomer is an epoxy diacrylate.

The Omega Oligomer is prepared by reaction of a hydroxyl-containing (meth)acrylate, an isocyanate, a polyether polyol, and tripropylene glycol in the presence of a polymerization inhibitor and a catalyst.

The hydroxyl-containing (meth)acrylate used to prepare the Omega Oligomer may be of any suitable type, but desirably is a hydroxyalkyl (meth)acrylate such as hydroxyethyl acrylate (HEA), or is an acrylate selected from the group consisting of polypropylene glycol monoacrylate (PPA6), tripropylene glycol monoacrylate (TPGMA), caprolactone acrylates, and pentaerythritol triacrylate (e.g., SR-444). HEA is preferred. When preparing the Omega Oligomer, the hydroxyl-containing (meth)acrylate may be added to the reaction mixture in an amount ranging from 2 wt.% to 20wt.%, and preferably from 5 to 7 wt.%, based on the total weight of the coating composition.

The isocyanate may be of any suitable type, e.g., aromatic or aliphatic, but desirably is a diisocyanate. Suitable diisocyanates are known in the art, and include, for example, isophorone diisocyanate (IPDI) and toluene diisocyanate (TDI). Preferably the diisocyanate is TDI.

When preparing the Omega Oligomer, the isocyanate may be added to the reaction mixture in an amount ranging from 2 wt% to 20 wt.%, and preferably from 7 to 9 wt.%, based on the total weight of the coating composition.

The polyether polyol can be selected from the group consisting of polyethylene glycol and polypropylene glycol. Preferably the polyether polyol is a polypropylene glycol having a number average molecular weight 300 g/mol to 5,000 g/mol, and more preferably a polypropylene glycol having a number average molecular weight of about 1000 (e.g., Pluracol P1010 polypropylene glycol available from BASF). When preparing the Omega Oligomer, the polyether polyol may be added to the reaction mixture in an amount ranging from 2 wt.% to 36 wt.%, and preferably from 15 to 18 wt%, based on the total weight of the coating composition.

Tripropylene glycol (TPG) is commercially available, for example from Dow Chemical. When preparing the Omega Oligomer, tripropylene glycol may be added to the reaction mixture in an amount ranging from 0.1 wt.% to 5wt. %, and preferably from 0.3 to 0.6 wt.%, based on the total weight of the coating composition.

The preparation of the Omega Oligomer is conducted in the presence of a polymerization inhibitor which is used to inhibit the polymerization of acrylate during the reaction. A variety of inhibitors are known in the art and may be used in the preparation of the oligomer including, without limitation, butylated hydroxytoluene (BHT), hydroquinone and derivatives thereof such as methylether hydroquinone and 2,5-dibutyl hydroquinone; 3,5-di-tert-butyl-4-hydroxytoluene; metyl-di-tert-butylphenol; 2,6-di-tert-butyl-p-cresol; and the like. The preferred polymerization inhibitor is BHT. When preparing the Omega Oligomer, the polymerization inhibitor may be added to the reaction mixture in an amount ranging from 0.001 wt.% to 1.0 wt.%, and preferably from 0.01 to 0.03 wt.%, based on the total weight of the coating composition.

The preparation of the Omega Oligomer is conducted in the presence of a catalyst such as an urethanization catalyst.

Suitable catalysts are well known in the art, and may be selected from the group consisting of copper naphthenate, cobalt naphthenate, zinc naphthenate, triethylamine, triethylenediamine, 2-methyltriethyleneamine, dibutyl tin dilaurate (DBTDL); metal carboxylates, including, but not limited to: organobismuth catalysts such as bismuth neodecanoate, CAS 34364-26-6; zinc neodecanoate, CAS 27253-29-8; zirconium neadecanoate, CAS 39049-04-2; and zinc 2-ethylhexanoate, CAS 136-53-8; sulfonic acids, including but not limited to dodecylbenzene sulfonic acid, CAS 27176-87-0; and methane sulfonic acid, CAS 75-75-2; amino or organo-base catalysts, including, but not limited to: 1,2-dimethylimidazole, CAS 1739-84-0; and diazabicyclo[2.2.2]octane (DABCO), CAS 280-57-9 (strong base); and triphenyl phosphine; alkoxides of zirconium and titanium, including, but not limited to zirconium butoxide, (tetrabutyl zirconate) CAS 1071-76-7; and titanium butoxide, (tetrabutyl titanate) CAS 5593-70-4; and ionic liquid phosphonium, imidazolium, and pyridinium salts, such as, but not limited to, trihexyl(tetradecyl)phosphonium hexafluorophosphate, CAS No. 374683-44-0; 1-butyl-3-methylimidazolium acetate, CAS No. 284049-75-8; and N-butyl-4-methylpyridinium chloride, CAS No. 125652-55-3; and tetradecyl(trihexyl) phosphonium, available as Cyphosil 101.

The catalyst preferably is an amino catalyst, more preferably the catalyst is DABCO.

The catalyst may be used in the free, soluble, and homogeneous state, or may be tethered to inert agents such as silica gel, or divinyl crosslinked macroreticular resins, and used in the heterogeneous state to be filtered at the conclusion of oligomer synthesis. When preparing the Omega Oligomer, the catalyst may be added to the oligomer reaction mixture in any suitable amount, desirably from 0.001 wt.% to 1 wt.%, and preferably from 0.06 to 0.1 wt.%, based on the total weight of the coating composition.

Upsilon Oligomer

The Upsilon Oligomer is an epoxy diacrylate. Preferably the Upsilon Oligomer is a bisphenol A based epoxy diacrylate oligomer, for example CN120 or CN120Z oligomer sold by Sartomer. More preferably the Upsilon Oligomer is CN120Z.

The Upsilon Oligomer may be present in the coating composition in an amount ranging from 1 wt.% to 50 wt. %, and preferably from 20 wt.% to 25 wt.%, based on the total weight of the coating composition.

Radiation Curable Secondary Coating Composition

The Omega Oligomer and Upsilon Oligomer of the invention are blended to form a Secondary Coating Oligomer Blend, which is then mixed with the first, second and optional third diluent monomers, followed by the antioxidant, first photoinitiator, second photoinitiator and optionally the slip additive or the blend of slip additives are added to form the Radiation Curable Secondary Coating Composition of the invention. In preparing the Radiation Curable Secondary Coating Composition of the invention, the Omega Oligomer is typically synthesized first and then the Upsilon Oligomer is added to form the Secondary Coating Oligomer Blend.

The first, second and optional third diluent monomers can be low viscosity monomers having at least one functional group capable of polymerization when exposed to actinic radiation. This functional group may be of the same nature as that used in the radiation-curable Omega Oligomer. Preferably, the functional group present in the diluent monomers is capable of copolymerizing with the radiation-curable functional group present in the Omega Oligomer. More preferably, the radiation-curable functional group forms free radicals during curing which can react with the free radicals generated on the surface of surface-treated optical fiber.

For example, the diluent monomer can be a monomer or mixture of monomers having an acrylate or vinyl ether functionality and a $C_4$-$C_{20}$ alkyl or polyether moiety. Particular examples of such diluent monomers include hexylacrylate, 2-ethylhexylacrylate, isobornylacrylate, decylacrylate, laurylacrylate, stearylacrylate, 2-ethoxyethoxy-ethylacrylate, laurylvinylether, 2-ethylhexylvinyl ether, isodecyl acrylate (e.g., SR 395, available from Sartomer), isooctyl acrylate, N-vinylcaprolactam, N-vinylpyrrolidone, tripropylene glycol monoacrylate (TPGMA), acrylamides, and the alkoxylated derivatives, such as, ethoxylated lauryl acrylate, ethoxylated isodecyl acrylate, and the like.

Another type of diluent monomer that can be used is a compound having an aromatic group. Particular examples of diluent monomers having an aromatic group include ethylene glycol phenyl ether acrylate, polyethylene glycol phenyl ether acrylate, polypropylene glycol phenyl ether acrylate, and alkyl-substituted phenyl derivatives of the above monomers, such as polyethylene glycol nonylphenyl ether acrylate. A preferred diluent monomer is ethoxylated nonylphenol acrylate (e.g., Photomer 4066, available from Cognis; SR504D, available from Sartomer).

The diluent monomer can also comprise a diluent having two or more functional groups capable of polymerization. Particular examples of such diluents include $C_2$-$C_{18}$ hydrocarbon diol diacrylates, $C_4$-$C_{18}$ hydrocarbon divinylethers, $C_3$-$C_{18}$ hydrocarbon triacrylates, and the polyether analogues thereof, and the like, such as 1,6-hexanedioldiacrylate, trimethylolpropanetriacrylate, hexanedioldivinylether, triethylene glycol diacrylate, pentacrythritol triacrylate, ethoxylated bisphenol A diacrylate, tripropyloneglycol diacrylate (TPQDA, e.g., SR 306; SR 306HP available from Sartomer), and tris-2-hydroxyethyl isocyanurate triacrylate (e.g., SR-368 available from Sartomer).

The first diluent monomer preferably is a monomer having an acrylate or vinyl ether functionality and a $C_4$-$C_{20}$ alkyl or polyether moiety, more preferably ethoxylated nonyl phenol acrylate (e.g., Photomer 4066). The second diluent monomer preferably is a compound having an aromatic group, more preferably ethoxylated bisphenol A diacrylate (SR-349). The optional third diluent monomer preferably is a monomer having two or more functional groups capable of polymerization, more preferably tripropylene glycol diacrylate (SR-306HP).

The diluent monomer may be added to the coating composition in an amount ranging from 5 wt.% to 75 wt.%, and preferably from 35 to 45 wt.%, based on the total weight of the coating composition. When there is a first, second, and third diluent monomer, it is preferred that the amount of the first diluent monomer is 2 wt.% to 30 wt.%, preferably 4 wt.% to 7 wt.%, the amount of the second diluent is 2 wt.% to 50 wt.%. preferably 15 wt.% to 25 wt.%, and the amount of the third diluent is 2 wt% to 50 wt.%, preferably 13 wt.% to 19 wt.%, based on the weight of the coating composition.

The antioxidant is a sterically hindered phenolic compound, for example 2,6-ditertiarybutyl-4-methylphenol, 2,6-ditertiarybutyl-4-ethyl phenol, 2,6-ditertiarybutyl-4-n-butyl phenol, 4-hydroxymethyl-2,6-ditertiarybutyl phenol, and such commercially available compounds as thiodiethylene bis(3,5-ditertiarybutyl-4-hydroxyl)hydrocinnamate, octadecyl-3,5-ditertiarybutyl-4-hydroxyhydrocinnamate, 1,6-hexamethylene bis(3,5-ditertiarybutyl-4-hydroxyhydrocinnamate), and tetrakis(methylene(3,5-ditertiary-butyl-4-hydroxyhydrocinnamate))methane, all available as Irganox 1035, 1076, 259 and 1010, respectively, from Ciba Geigy. Other examples of sterically hindered phenolics useful herein include 1,3,5-trimethyl-2,4,6-tris(3,5-ditertiarybutyl-4-hydroxybenzyl)benzene and 4,4'-methylene-bis(2,6-ditertiarybutylphenol), available as Ethyl 330 and 702, respectively, from Ethyl Corporation. The preferred antioxidant is thiodiethylene bis(3,5-ditertiarybutyt-4-hydroxyl)hydrocinnamate (e.g., Irganox 103 5). The antioxidant may be added to the coating composition in an amount ranging from 0.001 wt.% to 1 wt%, and preferably 0.3 wt.% to 0.7 wt.%.

The first photoinitiator can be an α-hydroxyketo-type photoinitiator such as 1. hydroxycyclohexyl phenyl ketone (e.g., Irgacure 184, available from Ciba Geigy; Chivacure 184, available from Chitec Chemicals), 2-hydroxy-2-methyl-1-phenyl-propan-1-one (e.g., Darocur 1173, available from Ciba Geigy), 2-benzyl-2- dimethylamino-1-(4-morpholinophenyl)-buten-1-one, 2,2-dimethoxy-2-phenyl-acetophenone, 2-methyl-1-[4-(methylthio)phenyl]-2- (4-morpholinyl)-1-propanone, 2-methyl-1-[4-(methylthio)phenyl]-2-morpholinopropan-1-one (e.g., Irgacure 907, available from Ciba Geigy), 4-(2-hydroxyethoxy)phenyl-2- hydroxy-2-propyl ketone dimethoxyphenylacetophenone, 1-(4-isopropylphenyl)-2-hydroxy- 2-methyl-propan-1-one, 1-(4-dodecylphanyl)-2-hydroxy-2-methylpmpan-1-one, and 4-(2-hydroxyethoxy)phenyl-2-(2-hydroxy-2-propyl)ketone. Preferably the first photoinitiator is 1-hydroxycyclohexyl phenyl ketone (e.g., Irgacure 184).

The second photoinitiator can be a phosphine oxide type photoinitiator, such as 2,4,6-trimethylbenzoyl-diphenylphosphine oxide type (TPO; e.g., Lucirin TPO available from BASF; Darocur TPO, available from Ciba Geigy), bis (2,4,6-trimethylbenzoyl)phenylphosphine oxide (e.g., Irgacure 819, available from Ciba Geigy), or bisacyl phosphine oxide type (BAPO) photoinitiators. Preferably the second photoinitiator is TPO.

The first photoinitiator may be added to the coating composition in an amount ranging from 0.1 wt.% to 7 wt.%, preferably from 1.75 wt.% to 3.75 wt.%. The second photoinitiator may be added to the coating composition in an amount ranging from 0.1 wt.% to 7 wt.%, preferably from 0.5 wt.% to 1 wt.%.

Slip Additives are commercially available. The preferred blend of slip additives is a blend of DC-57 siloxanc sold by Dow Corning which is dimethylmethyl(propyl-(poly(EO))acctate)siloxane (CAS Registry No. 70914-12-4) and DC-190 siloxane blend sold by Dow Corning which is a mixture of from 40.0 to 70.0 wt.% dimethylmethyl-(propyl(poly (EO)(PO))acetate) siloxane (CAS Registry No. 68037-64-9). from 30.0 to 60.0 wt.% of poly(ethylene oxide propylene oxide)monoallylether acetate (CAS Registry No. 56090-69-8), and less than 9.0 wt.% polyether polyol acetate (CAS Registry No. 39362-5 1-1). The slip additives may be added to the coating composition in an amount ranging from 0.1 wt.% to wt.%, preferably from 0.35 wt.% to 0.75 wt.%.

One embodiment of the Radiation Curable Secondary Coating Composition is as follows:

| **Omega Oligomer** | |
|---|---|
| hydroxyl-containing (meth)acrylate | from 5 to 7 wt.% |

(continued)

| Omega Oligomer | |
|---|---|
| isocyanate | from 7 to 9 wt.% |
| polyether polyol | from 15 to 18 wt.% |
| tripropylene glycol | from 0.3 to 0.6 wt.% |
| polymerization inhibitor | from 0.01 to 0.03 wt.% |
| catalyst | from 0.06 to 0.1 wt.% |
| | |
| Upsilon Oligomer | |
| epoxy diacrylate | from 20 to 25 wt.% |
| | |
| Diluent Monomers | |
| first diluent monomer | from 4 to 7 wt.% |
| second diluent monomer | from 15 to 25 wt.% |
| third diluent monomer | from 13 to 19 wt.% |
| | |
| Other Additives | |
| antioxidant | from 0.3 to 0.7 wt.% |
| first photoinitiator | from 1.75 to 3.75 wt.% |
| second photoinitiator | from 0.5 to 1 wt% |
| slip additives (optional) | from 0.35 to 0.75 wt.% |

Another embodiment of the Radiation Curable Secondary Coating Composition is as follows:

| Omega Oligomer | 32.08 wt.% |
|---|---|
| hydroxyl-containing (meth)acrylate (e.g., HEA) | 6.49 wt.% |
| isocyanate (e.g., TDI) | 8.12 wt.% |
| polyether polyol (e.g., Pluracol P1010) | 16.89 wt.% |
| tripropylene glycol | 0.48 wt.% |
| polymerization inhibitor (e.g., BHT) | 0.02 wt.% |
| catalyst (e.g., DABCO) | 0.8 wt.% |
| | |
| Upsilon Oligomer | |
| epoxy diacrylate (e.g., CN120Z) | 22.27 wt.% |
| | |
| Diluent Monomers | 41.66 wt.% |
| first diluent monomer (e.g., ethoxylated nonyl | 5.66 wt.% |
| phenyl acrylate) | |
| second diluent monomer (e.g., ethoxylated bisphenol A diacrylate) | 20.00 wt.% |
| third diluent monomer (e.g., tripropylene glycol diacrylate) | 16.00 wt.% |

(continued)

| Other Additives | 4.50 wt.% |
|---|---|
| antioxidant (e.g., Irganox 1035) | 0.5 wt.% |
| first photoinitiator (e.g., Irgacure 184) | 2.75 wt.% |
| second photoinitiator (e.g., TPO) | 0.75 wt.% |
| slip additives (e.g., DC-57 + DC-190) | 0.5 wt.% (0.17 wt.% + 0.33 wt.%) |
| **Total** | **100.51 wt.%*** |
| *0.51 of other ingredients is not present when the optional blend of slip additives is present | |

This Secondary Coating of the instant claimed invention is referred to as the D Secondary Coating.

After a commercial Primary Coating is found, it may be applied directly onto the surface of the optical fiber. The radiation curable Primary Coating may be any commercially available radiation curable Primary Coating for optical fiber. Such commercially available radiation curable Primary Coatings are available from DSM Desotech Inc., and others, including, but without being limited to Hexion, Luvantix and PhiChem.

Drawing is carried out using either wet on dry or wet on wet mode. Wet on dry mode means the liquid Primary Coating is applied wet, and then radiation is applied to cure the liquid Primary Coating to a solid layer on the wire. After the Primary Coating is cured, the Secondary Coating is applied and then cured as well. Wet on wet mode means the liquid Primary Coating is applied wet, then the Secondary Coating is applied wet and then both the Primary Coating and Secondary Coatings are cured.

The preferred radiation to be applied to effect the cure is Ultraviolet.

If the Secondary Coating is clear rather than colored, a layer of ink coating may be applied thereon. If the Secondary Coating is colored, the ink coating layer is typically not applied onto the Secondary Coating. Regardless of whether the ink coating is applied, it is common practice to place a plurality of coated fibers alongside each other in a ribbon assembly, applying a radiation curable matrix coating thereto to hold the plurality of fibers in place in that ribbon assembly.

After the Secondary Coating is cured, a layer of "ink coating" is typically applied and then the coated and inked optical fiber is placed alongside other coated and inked optical fibers in a "ribbon assembly" and a radiation curable matrix coating is used to hold the optical fibers in the desired location in the ribbon assembly.

Secondary Coating Properties

A Secondary Coating produced from the coating composition according to the invention will desirably have properties such as modulus, toughness and elongation suitable for coating optical fiber. The Secondary Coating typically has toughness greater than 12 J/m$^3$, a secant modulus of less than 1500 MPa, and a $T_g$ greater than 50° C. Preferably, the Secondary Coating has toughness greater than 14 J/m$^3$, a secant modulus of from 200 MPa to 1200 MPa, and a $T_g$ greater than 60° C. More preferably, the Secondary Coating has a toughness greater than 16 J/m$^3$, a secant modulus of from 400 MPa to 1000 MPa, and a $T_g$ greater than 70° C.

The Secondary Coating preferably has an elongation of from 30% 80%.

In addition, preferably the Secondary Coating shows a change in equilibrium modulus of 20 % or less when aged for 60 days at 85° C and 85% relative humidity. The modulus, as is well known, is the rate of change of strain as a function of stress. This is represented graphically as the slope of the straight line portion of a stress-strain diagram. The modulus may be determined by use of any instrument suitable for providing a stress-strain curve of sample. Instruments suitable for this analysis include those manufactured by Instron, Inc., and include the Instron 5564.

In determining the modulus of the cured coating compositions in accordance with the invention, a sample of the radiation-curable composition is drawn onto a plate to provide a thin film, or alternatively formed into a rod using a cylindrical template. The sample is then exposed to radiation to affect cure. One (or more, if an average value is desired) film sample is cut from the cured film. The sample(s) should be free of significant defects, e.g., holes, jagged edges, substantial non-uniform thickness. Opposite ends of the sample are then attached to the instrument. During testing, a first end of the sample remains stationary, while the instrument moves the second end away from the first end at what may be referred to as a crosshead speed. The crosshead speed, which may initially be set at 2.54 cm/minute inch/minutes, may be altered if found to be inappropriate for a particular sample, e.g., a high modulus film breaks before an acceptable stress-strain curve is obtained. After setup is completed, the testing is then commenced, with the instrument providing a stress-strain curve, modulus and other data. It is important to note that toughness can be measured in several ways. One way includes a tensile modulus of toughness that is based on the ability of material to absorb energy up to the point of rupture, and that is determined by measuring the area under the stress-strain curve. Another way to measure toughness is fracture toughness based on tear strength that requires starting with a pre-defined infinitely sharp crack of a certain length, and that uses a critical stress intensity factor resulting from the resistance of the material to crack propagation.

The following examples further illustrate the invention.

EXAMPLES

Tensile Strength, Elongation and Modulus Test Method: The tensile properties (tensile strength, percent elongation at break, and modulus) of cured samples of the radiation curable Secondary Coatings for optical fiber are tested on films using a universal testing instrument, Instron Model 4201 equipped with a suitable personal computer and Instron software to yield values of tensile strength, percent elongation at break, and secant or segment modulus. Samples are prepared for testing by curing a 75-$\mu$m film of the material using a Fusion UV processor. The set-up of the Fusion UV processor is as follows:

Lamps: D
Intensity 120W/cm
Intensity meter IL390
Dose 1.0 J/cm$^2$
Atmosphere Nitrogen
Conditioning time in 50% humidity 16-24 hours

Samples are cured at 1.0 J/cm$^2$ in a nitrogen atmosphere. Test specimens having a width of 1.27 cm (0.5 inches) and a length of 12.7 cm (5 inches) are cut from the film. The exact thickness of each specimen is measured with a micrometer. For relatively soft coatings (e.g., those with a modulus of less than about 10 MPa), the coating is drawn down and cured on a glass plate and the individual specimens cut from the glass plate with a scalpel. A 0.9 kg (2-lb) load cell is used in the Instron and modulus is calculated at 2.5% elongation with a least squares fit of the stress-strain plot. Cured films are conditioned at 23 $\pm$ 1° C and 50 $\pm$ 5% relative humidity for between 16 and 24 hours, prior to testing.

For relatively harder coatings, the coating is drawn down on a Mylar film and specimens are cut with a Thwing Albert 1.27 cm (0.5-inch) precision sample cutter. A 9.1 kg 20-lb load cell is used in the Instron and modulus is calculated at 2.5% elongation from the secant at that point. Cured films are conditioned at 23 $\pm$ 1° C and 50 $\pm$ 5% relative humidity for between 16 hours and 24 hours prior to testing. For testing specimens, the gage length is 5.1 cm (2-inches) and the crosshead speed is 2.54 cm/minute (1.00 inches/minute). All testing is done at a temperature of 23 $\pm$ 1°C and a relative humidity of 50 $\pm$ 5%. All measurements are determined from the average of at least 6 test specimens.

DMA Test Method: Dynamic Mechanical Analysis (DMA) is carried out on the test samples, using an RSA-II instrument manufactured by Rheometric Scientific Inc. A free film specimen (typically about 36 mm long, 12 mm wide, and 0.075 mm thick) is mounted in the grips of the instrument, and the temperature initially brought to 80° C and held there for about five minutes. During the latter soak period at 80° C, the sample is stretched by about 2.5% of its original length. Also during this time, information about the sample identity, its dimensions, and the specific test method is entered into the software (RSI Orchestrator) residing on the attached personal computer.

All tests are performed at a frequency of 1.0 radians, with the dynamic temperature step method having 2° C steps, a soak time of 5 to 10 seconds, an initial strain of about 0,001 ($\Delta$L/L), where L= distance between the gap, (and with one such RSA-II instrument, L= 22.4 millimeters,) and with autotension and autostrain options activated. The autotension is set to ensure that the sample remained under a tensile force throughout the run, and autostrain is set to allow the strain to be increased as the sample passed through the glass transition and became softer. After the 5 minute soak time, the temperature in the sample oven is reduced in 20° C steps until the starting temperature, typically -80° C or -60° C, is reached. The final temperature of the run is entered into the software before starting the run, such that the data for a sample would extend from the glassy region through the transition region and well into the rubbery region.

The run is started and allowed to proceed to completion. After completion of the run, a graph of tensile storage modulus = E', tensile loss modulus = E", and tan $\delta$, all versus temperature, appeared on the computer screen. The data points on each curve are smoothed, using a program in the software. On this plot, three points representing the glass transition are identified:

1) The temperature at which E'=1000 MPa;

2) The temperature at which E'=100 MPa;

3) The temperature of the peak in the tan $\delta$ curve.

If the tan δ curve contained more than one peak, the temperature of each peak is measured. One additional value obtained from the graph is the minimum value for E' in the rubbery region. This value is reported as the equilibrium modulus, $E_0$.

Water Sensitivity Test Method: A layer of the composition is cured to provide a UV cured coating test strip 3.8 cm x 3.8 cm x 15 μm (1.5 inch x 1.5 inch x 0.6 mils). The test strip is weighed and placed in a vial containing deionized water, which is subsequently stored for 3 weeks at 23° C. At periodic intervals, e.g. 30 minutes, 1 hour, 2 hours, 3 hours, 6 hours, 1 day, 2 days, 3 days, 7 days, 14 days, and 21 days, the test strip is removed from the vial and gently patted dry with a paper towel and reweighed. The percent water absorption is reported as 100*(weight after immersion-weight before immersion)/(weight before immersion). The peak water absorption is the highest water absorption value reached during the 3-week immersion period. At the end of the 3-week period, the test strip is dried in a 60° C oven for 1 hour, cooled in a desiccator for 15 minutes, and reweighed. The percent water extractables is reported as 100*(weight before immersion-weight after drying)/(weight before immersion). The water sensitivity is reported as |peak water absorption| + |water extractables|. Three test strips are tested to improve the accuracy of the test.

Refractive Index Test Method: The refractive index of the cured compositions is determined with the Becke Line method, which entails matching the refractive index of finely cut strips of the cured composition with immersion liquids of known refraction properties. The test is performed under a microscope at 23° C and with light having a wavelength of 589 nm.

Viscosity Test Method: The viscosity is measured using a Physica MC10 Viscometer. The test samples are examined and if an excessive amount of bubbles is present, steps are taken to remove most of the bubbles. Not all bubbles need to be removed at this stage, because the act of sample loading introduces some bubbles. The instrument is set up for the conventional Z3 system, which is used. The samples are loaded into a disposable aluminum cup by using the syringe to measure out 17 cm$^3$. The sample in the cup is examined and if it contains an excessive amount of bubbles, they are removed by a direct means such as centrifugation, or enough time is allowed to elapse to let the bubbles escape from the bulk of the liquid. Bubbles at the top surface of the liquid are acceptable. The bob is gently lowered into the liquid in the measuring cup, and the cup and bob are installed in the instrument. The sample temperature is allowed to equilibrate with the temperature of the circulating liquid by waiting five minutes. Then, the rotational speed is set to a desired value which will produce the desired shear rate. The desired value of the shear rate is easily determined by one of ordinary skill in the art from an expected viscosity range of the sample. The shear rate is typically 50 sec$^{-1}$ or 100 sec$^{-1}$. The instrument panel reads out a viscosity value, and if the viscosity value varied only slightly (less than 2% relative variation) for 15 seconds, the measurement is complete. If not, it is possible that the temperature had not yet reached an equilibrium value, or that the material is changing due to shearing. If the latter case, further testing at different shear rates will be needed to define the sample's viscous properties. The results reported are the average viscosity values of three test samples. The results are reported either in centipoises (cps) or milliPascal·seconds (mPa·s), which are equivalent.

## EXAMPLE 1

A D Secondary Coating prepared from a Radiation Curable Secondary Coating Composition of the invention is prepared and evaluated.

The tensile properties of cured D Secondary Coating are tested on rods following the method described in U.S. Patent 6,862,392.

The rods are prepared by filling elastomeric clear silicone rubber tubing with the coating composition and exposing the composition to one Joule of UV radiation from a D lamp under nitrogen purge.

If the tubes are rotated 180°, then it is not required that the tubes be cured on aluminum foil. If the tubes are not rotated 180°, then the tubes are to be cured on aluminum foil.

The rods are recovered from the tubing by gently stretching the tube from the end of the rod and cutting the empty portion of the tube with a razor blade. The end of the rod is then grasped using forceps and the tubing was slowly pulled off of the rod.

The tensile strength, elongation, tensile modulus, toughness, $E_{max}$, and viscosity for D Secondary Coating are tested in accordance with the test methods described above in U.S. Patent No. 6,862,392. The test results are set forth below.

| Tensile Tests | D Secondary Coating |
|---|---|
| Tensile Strength (MPa) | 54.4 |
| % Elongation at Break (%) | 37.6 |

(continued)

| Tensile Tests | D Secondary Coating |
| --- | --- |
| Tensile Modulus (MPa) | 1137 |
| Toughness (J/m$^3$) | 113.7 |
| $E_{max}$ = % | 15.7 |
| Viscosity at 25/35/44/54/64 °C | 44.5 |

| DMA Test | D Secondary Coating (°C) |
| --- | --- |
| Temp. @ E' = 1000 MPa (° C) | 42.1 |
| Temp. @ E' = 100 MPa (° C) | 82.9 |
| Temp. @ tan $\delta_{max}$ (° C) | 77.9 |

| | D Secondary Coating |
| --- | --- |
| Eq. Modulus | MPa |
| Eq. Modulus (MPa) | 48.7 MPa |

| Viscosity Test | D Secondary Coating (mPa· s) |
| --- | --- |
| 25°C | 6831 |
| 35°C | 2406 |
| 45° C | 936 |
| 55° C | 445 |
| 65° C | 204 |

In the early years of optical fiber coating developments, all newly developed primary and Secondary Coatings were first tested for their cured film properties and then submitted for evaluation on fiber drawing towers. Out of all the coatings that were requested to be drawn, it was estimated that at most 30% of them were tested on the draw tower, due to high cost and scheduling difficulties. The time from when the coating was first formulated to the time of being applied to glass fiber was typically about 6 months, which greatly slowed the product development cycle.

It is known in the art of radiation cured coatings for optical fiber that when either the Primary Coating or the Secondary Coating was applied to glass fiber, its properties often differ from the flat film properties of a cured film of the same coating. This is believed to be because the coating on fiber and the coating flat film have differences in sample size, geometry, UV intensity exposure, acquired UV total exposure, processing speed, temperature of the substrate, curing temperature, and possibly nitrogen inerting conditions.

Equipment that would provide similar curing conditions as those present at fiber manufacturers, in order to enable a more reliable coating development route and faster turnaround time has been developed. This type of alternative application and curing equipment needed to be easy to use, low maintenance, and offer reproducible performance. The name of the equipment is a "draw tower simulator" hereinafter abbreviated "DTS". Draw tower simulators are custom designed and constructed based on detailed examination of actual glass fiber draw tower components. All the measurements (lamp positions, distance between coating stages, gaps between coating stages and UV lamps, etc) are duplicated from glass fiber drawing towers. This helps mimic the processing conditions used in fiber drawing industry.

One known DTS is equipped with five Fusion F600 lamps - two for the upper coating stage and three for the lower. The second lamp in each stage can be rotated at various angles between 15 - 135°, allowing for a more detailed study of the curing profile.

The "core" used for the known DTS is 130.0±1.0 μm stainless steel wire. Fiber drawing applicators of different designs, from different suppliers, are available for evaluation. This configuration allows the application of optical fiber coatings at similar conditions that actually exist at industry production sites.

The draw tower simulator has already been used to expand the analysis of radiation curable coatings on optical fiber. A method of measuring the Primary Coating's in-situ modulus that can be used to indicate the coating's strength, degree of cure, and the fiber's performance under different environments in 2003 was reported by P. A. M. Steeman, J.J. M. Slot, H. G. H. van Melick, A. A. F. v.d. Ven, H. Cao, and R. Johnson, in the Proceedings of the 52nd IWCS, p. 246 (2003). In 2004, Steeman et al reported on how the rheological high shear profile of optical fiber coatings can be used to predict the coatings' processability at faster drawing speeds P. A. M. Steeman, W. Zoetelief, H. Cao, and M. Bulters, Proceedings of the 53rd IWCS, p. 532 (2004). The draw tower simulator can be used to investigate further the properties of primary and Secondary Coatings on an optical fiber.

These test methods are useful for Secondary Coatings on wire or coatings on optical fiber:

<u>% RAU Secondary Test Method:</u> The degree of cure on the outer coating on an optical fiber is determined by FTIR using a diamond ATR accessory. FTIR instrument parameters include: 100 co-added scans, 4 cm$^{-1}$ resolution, DTGS detector, a spectrum range of 4000 - 650 cm$^{-1}$, and an approximately 25% reduction in the default mirror velocity to improve signal-to-noise. Two spectra are required; one of the uncured liquid coating that corresponds to the coating on the fiber and one of the outer coating on the fiber. The spectrum of the liquid coating is obtained after completely covering the diamond surface with the coating. The liquid should be the same batch that is used to coat the fiber if possible, but the minimum requirement is that it must be the same formulation. The final format of the spectrum should be in absorbance.

The fiber is mounted on the diamond and sufficient pressure is put on the fiber to obtain a spectrum suitable for quantitative analysis. For maximum spectral intensity, the fiber should be placed on the center of the diamond parallel to the direction of the infrared beam. If insufficient intensity is obtained with a single fiber, 2-3 fibers may be placed on the diamond parallel to each other and as close as possible. The final format of the spectrum should be in absorbance.

For both the liquid and the cured coating, measure the peak area of both the acrylate double bond peak at 810 cm$^{-1}$ and a reference peak in the 750 - 780 cm$^{-1}$ region. Peak area is determined using the baseline technique where a baseline is chosen to be tangent to absorbance minima on either side of the peak. The area under the peak and above the baseline is then determined. The integration limits for the liquid and the cured sample are not identical but are similar, especially for the reference peak.

The ratio of the acrylate peak area to the reference peak area is determined for both the liquid and the cured sample. Degree of cure, expressed as percent reacted acrylate unsaturation (% RAU), is calculated from the equation below:

$$\% \, RAU = \frac{(R_L - R_F) \; x \; 100}{R_L}$$

where $R_L$ is the area ratio of the liquid sample and $R_F$ is the area ratio of the cured outer coating.

<u>In-situ Modulus of Secondary Coating Test Method:</u> The in-situ modulus of a Secondary Coating on a dual-coated (soft Primary Coating and hard Secondary Coating) glass fiber or a metal wire fiber is measured by this test method. For sample preparation, strip -2 cm length of the coating layers off the fiber as a complete coating tube from one end of the coated fiber by first dipping the coated fiber end along with the stripping tool in liquid $N_2$ for at least 10 seconds and then strip the coating tube off with a fast motion while the coating layers are still rigid. A DMA (Dynamic Mechanical Analysis) instrument: Rheometrics Solids Analyzer (RSA-II) is used to measure the modulus of the Secondary Coating. For dual-coated fiber, Secondary Coating has much higher modulus than the Primary Coating; therefore the contribution from the Primary Coating on the dynamic tensile test results performed on the coating tube can be ignored. For RSA-II where the distance adjustment between the two grips is limited, the coating tube sample may be shorter than the distance between the two grips. A simple sample holder made by a metal plate folded and tightened at the open end by a screw is used to tightly hold the coating tube sample from the lower end. Slide the fixture into the center of the lower grip and tighten the grip. Using tweezers to straighten the coating tube to upright position through the upper grip. Close and tighten the upper grip. Adjust the strain offset until the pretension is ~ 10g.

The tests are conducted at room temperature (~23°C). Under the dynamic tensile test mode of DMA, the test frequency is set at 1.0 radian/second; the strain is 5E-4. The geometry type is selected as cylindrical. The sample length is the length of the coating tube between the upper edge of the metal fixture and the lower grip, 11 mm in our test. The diameter (D) is entered to be 0.16 mm according to the following equation:

$$`D = 2 \times \sqrt{R_s^{\;2} - R_p^{\;2}}$$

where $R_s$ and $R_p$ are secondary and Primary Coating outer radius respectively. The geometry of a standard fiber, $R_s$ =

122.5 μm and $R_p$=92.5 μm, is used for the calculation. A dynamic time sweep is run and 5 data points of tensile storage modulus E are recorded. The reported E is the average of all data points. This measured modulus E is then corrected by multiplying a correction factor which used the actual fiber geometry. The correction factor is $\left(122.5^2 - 92.5^2\right)/\left(R_s^{actual} - R_p^{actual}\right)$. For glass fibers, actual fiber geometry including $R_s$ and $R_p$ values is measured by PK2400 Fiber Geometry System. For wire fibers, $R_s$ and $R_p$ are measured under microscope. The reported E is the average of three test samples.

<u>In-situ $T_g$ Measurement Of Primary and Secondary Coatings Test Method:</u> The glass transition temperatures (Tg) of primary and Secondary Coatings on a dual-coated glass fiber or a metal wire fiber are measured by this method. These glass transition temperatures are referred to as "Tube Tg".

For sample preparation, strip ~2 cm length of the coating layers off the fiber as a complete coating tube from one end of the coated fiber by first dipping the coated fiber end along with the stripping tool in liquid $N_2$ for at least 10 seconds and then strip the coating tube off with a fast motion while the coating layers are still rigid.

A DMA (Dynamic Mechanical Analysis) instrument: Rheometrics Solids Analyzer (RSA-II) is used. For RSA-II, the gap between the two grips of RSAII can be expanded as much as 1 mm. The gap is first adjusted to the minimum level by adjusting strain offset. A simple sample holder made by a metal plate folded and tightened at the open end by a screw is used to tightly hold the coating tube sample from the lower end. Slide the fixture into the center of the lower grip and tighten the grip. Using tweezers to straighten the coating tube to upright position through the upper grip. Close and tighten the upper grip. Close the oven and set the oven temperature to a value higher than the $T_g$ for Secondary Coating or 100° C with liquid nitrogen as temperature control medium. When the oven temperature reached that temperature, the strain offset is adjusted until the pretension was in the range of 0 g to 0.3 g.

Under the dynamic temperature step test of DMA, the test frequency is set at 1.0 radian/second; the strain is 5E-3; the temperature increment is 2° C and the soak time is 10 seconds. The geometry type is selected as cylindrical, The geometry setting was the same as the one used for secondary in-situ modulus test. The sample length is the length of the coating tube between the upper edge of the metal fixture and the lower grip, 11 mm in our test. The diameter (D) is entered to be 0.16 mm according to the following equation:

$$D = 2 \times \sqrt{R_s^2 - R_p^2}$$

where $R_s$ and $R_p$ are secondary and Primary Coating outer radius respectively. The geometry of a standard fiber, $R_c$= 122.5 μm and $R_p$= 92.5 μm, is used for the calculation.

A dynamic temperature step test is run from the starting temperature (100°C in our test) till the temperature below the Primary Coating $T_g$ or -80°C. After the run, the peaks from tan δ curve are reported as Primary Coating $T_g$ (corresponding to the lower temperature) and Secondary Coating $T_g$ (corresponding to the higher temperature). Note that the measured glass transition temperatures, especially for primary glass transition temperature, should be considered as relative values of glass transition temperatures for the coating layers on fiber due to the tan δ shift from the complex structure of the coating tube.

Draw Tower Simulator Examples.

A commercially available radiation curable Primary Coating and various embodiments of the instant claimed Secondary Coating are applied to wire using a Draw Tower Simulator. The wire is run at five different line speeds, 750 meters/minute, 1200 meters/minute, 1500 meters/minute, 1800 meters/minute and 2100 meters/minute.

Drawing is carried out using either wet on dry or wet on wet mode. Wet on dry mode means the liquid Primary Coating is applied wet, and then the liquid Primary Coating is cured to a solid layer on the wire. After the Primary Coating is cured, the Secondary Coating is applied and then cured as well. Wet on wet mode means the liquid Primary Coating is applied wet, then the Secondary Coating is applied wet and then both the Primary Coating and Secondary Coatings are cured.

Multiple runs are conducted with a commercially available radiation curable Primary Coating and compositions of the instant claimed Secondary Coating. The cured Secondary Coating on the wire is tested for initial %RAU, initial in-situ modulus and initial Tube $T_g$. The coated wire is then aged for one month at 85°C and 85% relative humidity. The cured Secondary Coating on the wire is then tested for %RAU, in-situ modulus and Tube $T_g$. Set-up conditions for the Draw Tower Simulator:

- Zeid! dies are used. S99 for the 1° and S 105 for the 2°.
- 750, 1000, 1200, 1500, 1800, and 2100 m/min are the speeds.

- 5 lamps are used in the wet on dry process and 3 lamps are used in the wet on wet process.

  - (2) g³ W/cm² (600 W/in²)D Fusion UV lamps are used at 100% for the 1° coatings.
  - (3) g³ W/cm² (600 W/in²)D Fusion UV lamps are used at 100% for the 2° coatings.

- Temperatures for the two coatings are 30°C. The dies are also set to 30°C.
- Carbon dioxide level is 7 liters/min at each die.
- Nitrogen level is 20 liters/min at each lamp.
- Pressure for the 1° coating is 1 bar at 25 m/min and goes up to 3 bar at 1000 m/min.
- Pressure for the 2° coating is 1 bar at 25 m/min and goes up to 4 bar at 1000 m/min.

The cured radiation curable Secondary Coating on wire is found to have the following properties:

| Line Speed (m/min) | % RAU Secondary (Initial) | % RAU Secondary (1 month) |
| --- | --- | --- |
| 750 | 90-94 | 94-98 |
| 1200 | 86-90 | 91-95 |
| 1500 | 82-86 | 90-94 |
| 1800 | 83-87 | 89-93 |
| 2100 | 80-84 | 89-93 |
| | | |
| Line Speed (m/min) | In-situ Modulus Secondary (GPa) | In-situ Modulus Secondary (GPa) (1 month) |
| 750 | 1.30-1.70 | 1.40-1.90 |
| 1200 | 1.00-1.40 | 1.50-1.70 |
| 1500 | 1.00-1.40 | 1.30-1.70 |
| 1800 | 1.00-1.40 | 1.10-1.50 |
| 2100 | 0.60-1.00 | 1.00-1.40 |
| | | |
| Line Speed (m/min) | Secondary Tube Tg values (°C) (initial) | Secondary Tube Tg values (°C) (1 month) |
| 750 | 68-80 | 68-80 |
| 1200 | 65-69 | 67-71 |
| 1500 | 60-64 | 61-65 |
| 1800 | 61-65 | 61-65 |
| 2100 | 50-58 | 55-59 |

Therefore it is possible to describe and claim a wire coated with a first and second layer, wherein the first layer is a cured radiation curable Primary Coating that is in contact with the outer surface of the wire and the second layer is a cured radiation curable Secondary Coating of the instant claimed invention in contact with the outer surface of the Primary Coating,
wherein the cured Secondary Coating on the wire has the following properties after initial cure and after one month aging at 85°C and 85% relative humidity:

A) a % RAU of from 80% to 98%;
B) an in-situ modulus of between 60 GPa and 1.90 GPa; and
C) a Tube Tg, of from 50°C to 80°C.

Using this information it is also possible to describe and claim an optical fiber coated with a first and second layer, wherein the first layer is a cured radiation curable Primary Coating that is in contact with the outer surface of the optical fiber and the second layer is a cured radiation curable Secondary Coating of the instant claimed invention in contact with the outer surface of the Primary Coating,
wherein the cured Secondary Coating on the optical fiber has the following properties after initial cure and after one month aging at 85°C and 85% relative humidity:

A) a% RAU of from 80% to 98%;

B) an in-situ modulus of between 0.60 GPa and 1.90 GPa; and

C) a Tube Tg, of from 50°C to 80°C.

As previously described, the radiation curable Primary Coating may be any commercially available radiation curable Primary Coating for optical fiber. Such commercially available radiation curable Primary Coatings are available from DSM Desotech Inc., and others, including, but without being limited to Hexion, Luvantix and PhiChem.

The use of the terms "a" and "an" and "the" and similar referents in the context of describing the invention (especially in the context of the following claims) are to be construed to cover both the singular and the plural, unless otherwise indicated herein or clearly contradicted by centext The terms "comprising," "having," "including," and "containing" are to be construed as open-ended terms (i.e., meaning "including, but not limited to,") unless otherwise noted. Recitation of ranges of values herein are merely intended to serve as a shorthand method of referring individually to each separate value falling within the range, unless otherwise indicated herein, and each scparate value is incorporated into the specification as if it were individually recited herein. All methods described herein can be performed in any suitable order unless otherwise indicated herein or otherwise clearly contradicted by context. The use of any and all examples, or exemplary language (e.g., "such as") provided herein, is intended merely to better illuminate the invention and does not pose a limitation on the scope of the invention unless otherwise claimed. No language in the specification should be construed as indicating any non-claimed element as essential to the practice of the invention.

**Claims**

1.  A Radiation Curable Secondary Coating Composition, wherein said composition comprises

   A) a Secondary Coating Oligomer Blend, which is mixed with
   B) a first diluent monomer;
   C) a second diluent monomer;
   D) optionally, a third diluent monomer;
   E) an antioxidant;
   F) a first photoinitiator;
   G) a second photoinitiator; and
   H) optionally a slip additive or a blend of slip additives;

   wherein said Secondary Coating Oligomer Blend comprises:

   a) an Omega Oligomer; and
   β) an Upsilon Oligomer;

   wherein said Omega Oligomer is synthesized by the reaction of

   $\alpha$1) a hydroxyl-containing (meth)acrylate;
   $\alpha$2) an isocyanate;
   $\alpha$3) a polyether polyol; and
   $\alpha$4) tripropylene glycol; in the presence of
   $\alpha$5) a polymerization inhibitor; and
   $\alpha$6) a catalyst;
   to yield the Omega Oligomer;

   wherein said catalyst is selected from the group consisting of copper naphthenate, cobalt naphthenate, zinc naphthenate, triethylamine, triethylenediamine, 2-methyltriethyleneamine, dibutyl tin dilaurate; metal carboxylates, sulfonic acids, amino or organo-base catalysts, alkoxides of zirconium and titanium, and ionic liquid phosphonium, imidazolium and pyridinium salts; and

wherein said Upsilon Oligomer is an epoxy diacrylate.

2. A process for coating an optical fiber, the process comprising:

    a) operating a glass drawing tower to produce a glass optical fiber;
    b) coating said glass optical fiber with a commercially available radiation curable Primary Coating composition;
    c) optionally contacting said radiation curable Primary Coating composition with radiation to cure the coating;
    d) coating said glass optical fiber with the radiation curable Secondary Coating composition of Claim 1; and
    e) contacting said radiation curable Secondary Coating composition with radiation to cure the coating.

3. The process of Claim 2 wherein said glass drawing tower is operated at a line speed of between 750 meters/minute and 2100 meters/minute.

4. A wire coated with a first and second layer, wherein the first layer is a cured radiation curable Primary Coating that is in contact with the outer surface of the wire and the second layer is a cured radiation curable Secondary Coating of Claim 1 in contact with the outer surface of the Primary Coating,
wherein the cured Secondary Coating on the wire has the following properties after initial cure and after one month aging at 85 °C and 85 % relative humidity:

    A) a % RAU of from 80 % to 98 %;
    B) an in-situ modulus of between 0.60 GPa and 1.90 GPa; and
    C) a Tube Tg, of from 50 °C to 80 °C.

5. An optical fiber coated with a first and second layer, wherein the first layer is a cured radiation curable Primary Coating that is in contact with the outer surface of the optical fiber and the second layer is a cured radiation curable Secondary Coating of Claim 1, in contact with the outer surface of the Primary Coating,
wherein the cured Secondary Coating on the optical fiber has the following properties after initial cure and after one month aging at 85 °C and 86 % relative humidity:

    A) a % RAU of from 80 % to 98 %;
    B) an in-situ modulus of between 0.60 GPa and 1.90 GPa; and
    C) a Tube Tg, of from 50 °C to 80 °C.

6. The Radiation Curable Secondary Coating of Claim 1 in which said third diluent is present.

**Patentansprüche**

1. Strahlungshärtbare Sekundär-Beschichtungszusammensetzung, wobei die Zusammensetzung folgendes umfasst:

    (A) eine Sekundärbeschichtungs-Oligomermischung, die mit folgendem gemischt ist:
    (B) einem ersten Verdünnungsmonomer;
    (C) einem zweiten Verdünnungsmonomer;
    (D) wahlweise einem dritten Verdünnungsmonomer;
    (E) einem Antioxidationsmittel;
    (F) einem ersten Photoinitiator;
    (G) einem zweiten Photoinitiator; und
    (H) wahlweise einem Gleitzusatz oder einer Mischung aus Gleitzusätzen;

wobei die Sekundärbeschichtungs-Oligomermischung folgendes umfasst:

    ($\alpha$) ein Omega-Oligomer,; und
    ($\beta$) ein Ypsilon-Oligomer;

wobei das Omega-Oligomer durch eine Reaktion von folgendem synthetisiert wird:

    ($\alpha$1) einem hydroxylhaltigen Methacrylat;
    ($\alpha$2) einem Isocyanat;

(α3) einem Polyetherpolyol; und
(α4) Tripropylenglykol in Gegenwart
(α5) eines Polymerisationsinhibitors; und
(α6) eines Katalysators;
um das Omega-Oligomer zu erhalten;

wobei der Katalysator aus Kupfernaphthenat, Kobaltnaphthenat, Zinknaphthenat, Triethylamin, Triethylendiamin, 2-Methyltriethylenamin, Dibutylzinndilaurat, Metallcarboxylaten, Sulfonsäuren, Amino- oder Organo-basierten Katalysatoren, Alkoxiden von Zirkonium und Titan und ionischen flüssigen Phosphonium-, Imidazolium- und Pyridiniumsalzen ausgewählt ist; und
wobei das Ypsilon-Oligomer ein Epoxydiacrylat ist.

2. Verfahren zur Beschichtung einer optischen Faser, wobei das Verfahren folgendes umfasst:

(a) Betreiben eines Glaszugturms zur Herstellung einer optischen Glasfaser;
(b) Beschichten der optischen Glasfaser mit einer kommerziell erhältlichen, strahlungshärtbaren Grundierungs-Beschichtungszusammensetzung;
(c) wahlweise Kontaktieren der strahlungshärtbaren Grundierungs-Beschichtungszusammensetzung mit Strahlung, um die Beschichtung zu härten;
(d) Beschichten der optischen Glasfaser mit der strahlungshärtbaren Sekundär-Beschichtungszusammensetzung gemäss Anspruch 1; und
(e) Kontaktieren der strahlungshärtbaren Sekundär-Beschichtungszusammensetzung mit Strahlung, um die Beschichtung zu härten.

3. Verfahren gemäss Anspruch 2, wobei der Glaszugturm mit einer Fliessgeschwindigkeit zwischen 750 und 2.100 m/min betrieben wird.

4. Draht, der mit einer ersten und einer zweiten Schicht beschichtet ist, wobei die erste Schicht ein strahlungsgehärtete härtbare Grundierungsbeschichtung ist, die in Kontakt mit der äusseren Oberfläche des Drahtes steht, und die zweite Schicht eine strahlungsgehärtete härtbare Sekundärbeschichtung gemäss Anspruch 1 ist, die in Kontakt mit der äusseren Oberfläche der Grundierungsbeschichtung steht, wobei die gehärtete Sekundärbeschichtung auf dem Draht nach dem ursprünglichen Härten und nach 1-monatiger Alterung bei 85°C und 85 % relativer Luftfeuchtigkeit die folgenden Eigenschaften aufweist:

(A) einen % RAU von 80 bis 98 %;
(B) ein in situ-Modul zwischen 0,60 und 1,90 GPa; und
(C) ein Tube Tg von 50 bis 80°C.

5. Optische Faser, die mit einer ersten und einer zweiten Schicht beschichtet ist, wobei die erste Schicht eine strahlungsgehärtete härtbare Grundierungsbeschichtung ist, die in Kontakt mit der äusseren Oberfläche der optischen Faser steht, und die zweite Schicht eine strahlungsgehärtete härtbare Sekundärbeschichtung gemäss Anspruch 1 ist, die in Kontakt mit der äusseren Oberfläche der Grundierungsbeschichtung steht, wobei die gehärtete Sekundärbeschichtung auf der optischen Faser nach dem ursprünglichen Härten und nach 1-monatiger Alterung bei 85°C und 85 % relativer Luftfeuchtigkeit die folgenden Eigenschaften aufweist:

(A) einen % RAU von 80 bis 98 %;
(B) ein in situ-Modul zwischen 0,60 und 1,90 GPa; und
(C) ein Tube Tg von 50 bis 80°C.

6. Strahlungshärtbare Sekundärbeschichtung gemäss Anspruch 1, bei der das dritte Verdünnungsmittel vorliegt.

## Revendications

1. Composition de revêtement secondaire durcissable par rayonnement, dans laquelle ladite composition comprend

A) une combinaison d'oligomères de revêtement secondaire, laquelle est mélangée avec
B) un premier monomère de diluant ;

    C) un second monomère de diluant ;

    D) éventuellement un troisième monomère de diluant ;

    E) un antioxydant ;

    F) un premier photoinitiateur ;

    G) un second photoinitiateur ; et

    H) éventuellement un lubrifiant ou une combinaison de lubrifiants;

dans laquelle ladite combinaison d'oligomères de revêtement secondaire comprend :

    α) un oligomère oméga ; et

    β) un oligomère epsilon ;

dans laquelle ledit oligomère oméga est synthétisé par la réaction de

    α1) un (méth)acrylate contenant un groupe hydroxyde

    α2) un isocyanate ;

    α3) un polyéther polyol ; et

    α4) du tripropylèneglycol ; en présence de

    α5) un inhibiteur de polymérisation ; et

    α6) un catalyseur ;

pour produire l'oligomère oméga ;

dans laquelle ledit catalyseur est choisi dans le groupe constitué du naphthénate de cuivre, du naphthénate de cobalt, du naphthénate de zinc, de la triéthylamine, de la triéthylènediamine, de la 2-méthyltriéthylèneamine, du dilaurate de dibutylétain ; de carboxylates de métaux, d'acides sulfoniques, de catalyseurs de base amino ou organo, d'alcoxydes de zirconium et de titane, et de sels liquides ioniques de phosphonium, d'imidazolium et de pyridinium ; et dans laquelle ledit oligomère epsilon est un diacrylate d'époxy.

2. Procédé pour le revêtement d'une fibre optique, le procédé comprenant les étapes consistant :

    a) à faire fonctionner une tour d'étirage de verre pour produire une fibre optique de verre ;

    b) à revêtir ladite fibre optique de verre avec une composition de revêtement primaire durcissable par rayonnement disponible dans le commerce ;

    c) à mettre éventuellement ladite composition de revêtement primaire durcissable par rayonnement en contact avec un rayonnement pour faire durcir le revêtement ;

    d) à revêtir ladite fibre optique de verre avec la composition de revêtement secondaire durcissable par rayonnement selon la revendication 1 ; et

    e) à mettre ladite composition de revêtement secondaire durcissable par rayonnement en contact avec un rayonnement pour faire durcir le revêtement.

3. Procédé selon la revendication 2, dans lequel ladite tour d'étirage de verre fonctionne à une vitesse de ligne de 750 mètres/minute à 2 100 mètres/minute.

4. Câble revêtu avec une première et une seconde couches, dans lequel la première couche est un revêtement primaire durcissable par rayonnement durci qui est en contact avec la surface externe du câble et la seconde couche est un revêtement secondaire durcissable par rayonnement durci selon la revendication 1 en contact avec la surface externe du revêtement primaire,

dans lequel le revêtement secondaire durci sur le câble présente les propriétés suivantes après durcissement initial et vieillissement d'un mois à 85°C et 85 % d'humidité relative :

    A) une valeur de % RAU de 80 % à 98 % ;

    B) un module in-situ de 0,60 GPa à 1,90 GPa ; et

    C) une valeur Tube Tg de 50°C à 80°C.

5. Fibre optique revêtue avec une première et une seconde couches, dans laquelle la première couche est un revêtement primaire durcissable par rayonnement durci qui est en contact avec la surface externe de la fibre optique et la seconde couche est un revêtement secondaire durcissable par rayonnement durci selon la revendication 1 en contact avec la surface externe du revêtement primaire,

dans laquelle le revêtement secondaire durci sur la fibre optique présente les propriétés suivantes après durcissement initial et vieillissement d'un mois à 85°C et 85 % d'humidité relative :

A) une valeur de % RAU de 80 % à 98 % ;
B) un module in-situ de 0,60 GPa à 1,90 GPa ; et
C) une valeur Tube Tg de 50°C à 80°C.

6. Revêtement secondaire durcissable par rayonnement selon la revendication 1, dans lequel ledit troisième diluant est présent.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 87472306 P
- WO 2005026228A1 A
- US 5146531 A
- US 6023547 A
- US 6584263 B
- US 6707977 B
- US 6775451 B
- US 6862392 B
- EP 539030 A
- JP 57092552 A
- DE 04126860 A1
- JP 10243227 A
- JP 2000072821 A
- US 6714712 B2
- US 6630242 B

### Non-patent literature cited in the description

- **D. Gloge.** Optical-fiber packaging and its influence on fiber straightness and loss. *Bell System Technical Journal,* 1975, vol. 54 (2), 245
- **W.B. Gardner.** Microbending Loss in Optical Fibers. *Bell System Technical Journal,* 1975, vol. 54 (2), 457
- **T. Yabuta.** Structural Analysis of Jacketed Optical Fibers Under Lateral Pressure. *J. Lightwave Tech.,* 1983, vol. LT-1 (4), 529
- **L.L. Blyler.** Polymer Coatings for Optical Fibers. *Chemtech,* 1987, 682
- **J. Baldauf.** Relationship of Mechanical Characteristics of Dual Coated Single Mode Optical Fibers and Microbending Loss. *IEICE Trans. Commun.,* 1993, vol. E76-B (4), 352
- **K. Kobayashi.** Study of Microbending Loss in Thin Coated Fibers and Fiber Ribbons. *IWCS,* 1993, 386
- **Also, Mark D. Soucek ; Aaron H. Johnson.** New Intramolecular Effect Observed for Polyesters: An Anomeric Effect. *JCT Research,* April 2004, vol. 1 (2), 111
- **P. A. M. Steeman ; J.J. M. Slot ; H. G. H. van Melick ; A. A. F. v.d. Ven ; H. Cao ; R. Johnson.** *Proceedings of the 52nd IWCS,* 2003, 246
- **P. A. M. Steeman ; W. Zoetelief ; H. Cao ; M. Bulters.** *Proceedings of the 53rd IWCS,* 2004, 532